# EUROPÄISCHE PATENTSCHRIFT

(11) **EP 1 502 340 B1**
(45) Veröffentlichungstag und Bekanntmachung des Hinweises auf die Patenterteilung: **01.03.2006**
(21) Anmeldenummer: 03725146.9
(22) Anmeldetag: 03.05.2003
(51) Int. Cl.: H02B 1/32, H02B 1/04, H02B 1/056

(54) **MONTAGESYSTEM INSBESONDERE FÜR EINEN SCHALTSCHRANK**
MOUNTING SYSTEM ESPECIALLY FOR A SWITCH CABINET AND METHOD FOR PROJECTING MODULES IN A MOUNTING SYSTEM ESPECIALLY FOR A SWITCH CABINET
SYSTEME DE MONTAGE, NOTAMMENT POUR UNE ARMOIRE DE DISTRIBUTION, ET PROCEDE POUR PREVOIR DES MODULES DANS UN SYSTEME DE MONTAGE DESTINE NOTAMMENT A UNE ARMOIRE DE DISTRIBUTION

(30) Priorität: 03.05.2002 EP 02009908
(43) Veröffentlichungstag der Anmeldung: 02.02.2005
(73) Patentinhaber: TRUMPF Werkzeugmaschinen GmbH + Co. KG, 71254 Ditzingen (DE)
(72) Erfinder: QUERO, Jose, 71691 Freiberg (DE); STIRNER, Achim, 73460 Hüttlingen (DE); VASSILIOS, Tsirogiannis, 74366 Kirchheim/N (DE)
(74) Vertreter: Kohler Schmid Möbus
(86) Internationale Anmeldenummer: PCT/EP2003/004670
(87) Internationale Veröffentlichungsnummer: WO 2003/094314

(56) Entgegenhaltungen:
- DE-A- 19 530 925
- DE-A- 19 948 329
- US-A- 5 046 172

## Beschreibung

Die Erfindung betrifft die Montage von Modulen insbesondere bei einem Schaltschrank.

Eine derartige Montage in einem Schaltschrank ist beispielsweise durch die DE 197 43 974 A1 bekannt geworden.

Dort ist ein Schaltschrank dargestellt und beschrieben, welcher einen Schaltschrankkasten mit mehreren Modulen aufweist. Die Module sind auf eine im Schaltschrank ortsfest angeordnete, hutförmig ausgebildete Tragschiene als Modul-Träger aufgebracht. Die Verbindung der einzelnen Module ist über Kontaktschwerter in den Modulen verwirklicht.

Die US-A- 5 046 172 offenbart eine Vorrichtung zur Verteilung der Strom- und Spannungsversorgung bei einem elektrischen Gerät, wobei eine Modulplatte zur Übertragung von Strom und Spannung auf eine Schiene mit elektrischen Leitungen aufsteckbar ist.

Der Erfindung liegt die Aufgabe zu Grunde, die Montage von Modulen insbesondere bei einem Schaltschrank weiter zu verbessern.

Diese Aufgabe wird durch ein Montagesystem gelöst, bei welchem die Module (d.h. ein Modul-Träger mit Bauteilen und mit einem Bus) an einer Schnellmontageplatte, insbesondere an einer Schrankwand eines Schaltschrankgehäuses, lösbar montierbar sind, wobei jedes Modul eine Schnittstelle für ein Bussystem zur Übertragung von Energie und Daten sowie zur elektrischen Verbindung der Module untereinander aufweist. Die Schnellmontageplatte kann Teil eines Schaltschrankgehäuses oder Maschinengehäuses sein oder dort oder anderer Stelle befestigt werden.

Die Bauteile können auf dem Modul-Träger Maschinen und Bauteil unabhängig (neutral) vormontiert werden, so dass sie nach Art eines Baukastensystems verwendbar sind. Die Verbindung der aufgesteckten Module erfolgt über ein mehrpoliges zur Übertragung von Energie und Daten geeignetes Buskabel.

Die vorgenannte Aufgabe wird auch durch ein Verfahren zur Montage von Modulen gelöst. Das erfindungsgemäße Verfahren zeichnet sich durch eine Parametrierung einer Bearbeitungseinheit einer Maschine oder Anlage (1. Verfahrensschritt), eine Auswahl vorgefertigter Module aus einer Datenbank (2. Verfahrensschritt), ein Erstellen eines Layouts einer Schnellmontageplatte, vorzugsweise einer Schaltschrankwand (3. Verfahrensschritt) und eine optionale Anordnung und Konnektierung der ausgewählten Module an der Schnellmontageplatte (vierter Verfahrensschritt) aus. Die Verfahrenschritte können im Rahmen der Erfindung in beliebiger Reihenfolge sequentiell oder auch parallel ausgeführt werden. Unter einer Bearbeitungseinheit wird beispielsweise eine Einheit zum Sorteieren, Be- oder Entladen, Trennen, Schneiden, etc. verstanden.

Die Erfindung ermöglicht eine einfachere automatisierte Modulfertigung, eine weitere Reduzierung der Montagestunden im Schaltschrankbau, eine Reduzierung der Konstruktionsdauer für neue Projekte, eine Reduzierung der Durchlaufzeiten des Schaltschranks, eine freie Variantenwahl bei der Endmontage, Optionen ohne Minusteile, eine einfache und sichere Montage von Bauteilen und Baugruppen (servicefreundlich), einen zentralen und dezentralen Aufbau mit gleichen Modulen, sowie eine einfache Anpassung an unterschiedliche Maschinenkonstellationen.

Die lösbare Montierbarkeit kann durch ein Einstecken oder Einhängen des Modul-Trägers mit Hilfe einer Schnellarretierung an der Schnellmontageplatte, beispielsweise der Schrankwand des Schaltschranks, verwirklicht sein.

Bei einer bevorzugten, leicht realisierbaren und einfach handhabbaren Ausführungsform ist der Modul-Träger für ein Modul durch eine Modul-Trägerplatte mit Laschen ausgebildet, wobei die Schnellmontageplatte Ausnehmungen aufweist, in welche die Laschen einsteckbar oder einhängbar sind.

Zur Ansteuerung eines Moduls und zur Koordination des Zusammenwirkens mehrerer Module weisen die Module eine Schnittstelle und/oder eine Netzkarte zur Ankopplung an eine Steuereinheit der Maschine auf.

Ein bevorzugtes Ausführungsbeispiel der Erfindung ist in der Zeichnung schematisch dargestellt und wird nachfolgend mit Bezug zu den Figuren der Zeichnung näher erläutert. Es zeigt:
- **Fig. 1**: das Prinzip der modularen Anordnung einer Funktionsbaugruppe auf einem Modul-Träger zur Montage in einem Schaltschrank;
- **Fig. 2**: die Befestigung des Modul-Trägers nach Fig. 1 an einer Schrankwand des Schaltschranks;
- **Fig. 3**: die Schrankwand des Schaltschranks nach Fig. 2 mit mehreren Funktionsbaugruppen.
- **Fig. 4**: eine erste Belegung von Energie- und Datenleitungen eines Moduls;
- **Fig. 5**: eine zweite Belegung von Energie- und Datenleitungen eines Moduls;
- **Fig. 6**: eine Prinzipdarstellung der Auswahl von Modulen für einen Schaltschrank;
- **Fig. 7**: die Umsetzung der Anordnung und Verbindung der ausgewählten Module nach Fig. 6 in ein Layout der Schaltschrankwand.

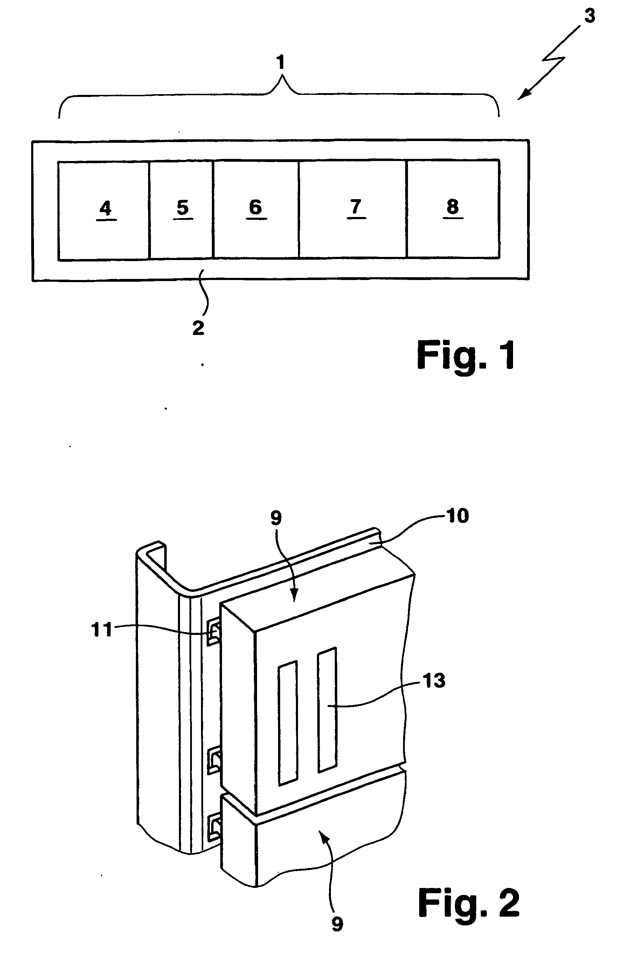

Gemäß **Fig. 1** ist die Gesamtheit aller Bauelemente zur Ansteuerung und Regelung einer Energieversorgung / Stromversorgung eines Verbrauchers, wie beispielsweise eines Motors, eines HF-Generators, eines Ventils oder eines Heizelements, als Funktionsbaugruppe **1** auf einem Modul-Träger **2** bevorzugt aus Metallblech untergebracht. Analog zu dieser Funktionsbaugruppe 1, welche beispielhaft beschrieben ist, können beliebig viele weitere Funktionsbaugruppen vormontiert vorgesehen sein. Die Funktionsbaugruppe 1 und der Modul-Träger 2 sind Teil eines Maschinen-und Bauteilen neutralen Modul- und Baukastensystems, welches eine Vielzahl dieser multifunktionalen Bauteile umfassen kann. Die geschaffenen Funktionsbaugruppen orientierten, neutralen Module **3** aus Funktionsbaugruppe 1 und Modul-Träger 2 lassen sich nach Art eines "Plug & Play" an dem Schaltschrank einstecken, erkennen, ansteuern und mit anderen Komponenten kombinieren.

Die Funktionsbaugruppe 1 umfasst folgende, in der Zeichnung nur schematisch angedeutete Bauteile: eine Netzkarte **4,** einen Schutzschalter **5,** einen Schalter **6,** einen Anschluss **7** und eine Busschnittstelle **8.** Denkbar ist auch, eine andere Funktionsbaugruppe, welche beispielsweise zur Steuerung eines Servoantriebs, eines Rechts-Links-Laufs, einer Spannungsversorgung, einer Busanschaltung (Gateway) usw. dienen können. Unterschiedlichste Bauteile und Funktionen können zu einer Funktionsbaugruppe zusammen gefasst werden.

Im Einzelnen werden folgende zusammenarbeitende Funktionen durch die Bauteile realisiert:

Die Netzkarte 4 dient als Software- und Hardware-Schnittstelle zur Ankopplung der Funktionsbaugruppe 1 an eine zentrale Steuerung des Verbrauchers. Der Schutzschalter 5 verhindert eine Überlastung des Moduls oder des Verbrauchers. Mit Hilfe des Schalters oder Schütz 6 kann der Verbraucher ein- oder ausgeschaltet werden. Über den durch Steckkontakte realisierten Anschluss 7 wird der Verbraucher an eine Energieversorgung /Stromversorgung angeschlossen. Die Verbindung der Funktionsbaugruppe 1 mit einer oder mehreren weiteren Funktionsbaugruppen wird über die Busschnittstelle 8 realisiert.

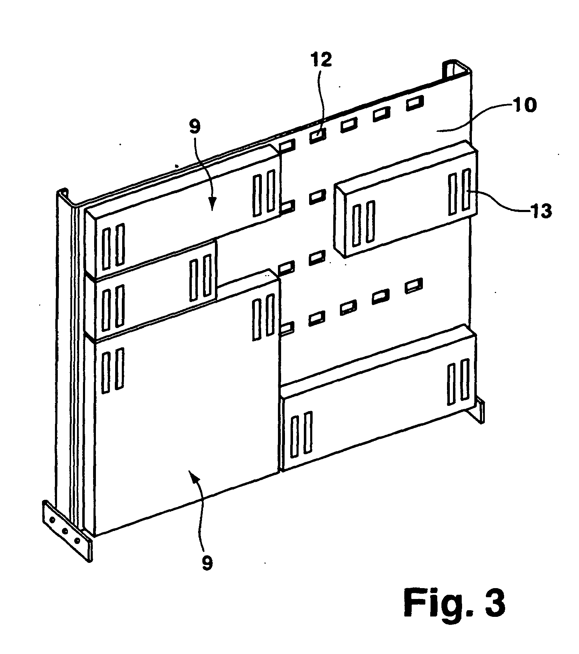

Aus der **Fig. 2** wird ersichtlich, wie die Funktionsbaugruppen orientierten Module **9** jeweils über Modul-Träger an einer aus Metallblech gefertigten durch eine Schrankwand **10** ausgebildeten Schnellmontageplatte beispielsweise eines nicht weiter dargestellten, an sich bekannten Schaltschrankgehäuses über Laschen **11** eingehängt werden können, welche in Ausnehmungen **12** (siehe Fig. 3) eingesteckt sind. Eine Kopplung der Funktionsbaugruppen der Module 9 erfolgt über die nur angedeuteten Schnittstellen **13** ohne Darstellung der Verbindungskabel des Bussystems. Die Schrankwand 10 weist eine Vielzahl solcher Ausnehmungen 12 auf, um den Modul-Träger unterschiedlich zu positionieren und / oder weitere Modul-Träger mit weiteren Funktionsgruppen anzubringen. Mit Hilfe einer Befestigungsschraube oder eines Riegels kann der austauschbar und lösbar montierte Modul-Träger an der Schrankwand 9 zusätzlich arretiert werden.

**Fig. 3** veranschaulicht die Teilbelegung der Schrankwand 10 des Schaltschrankgehäuses mit mehreren Modulen 9 unterschiedlicher Funktionsbaugruppen.

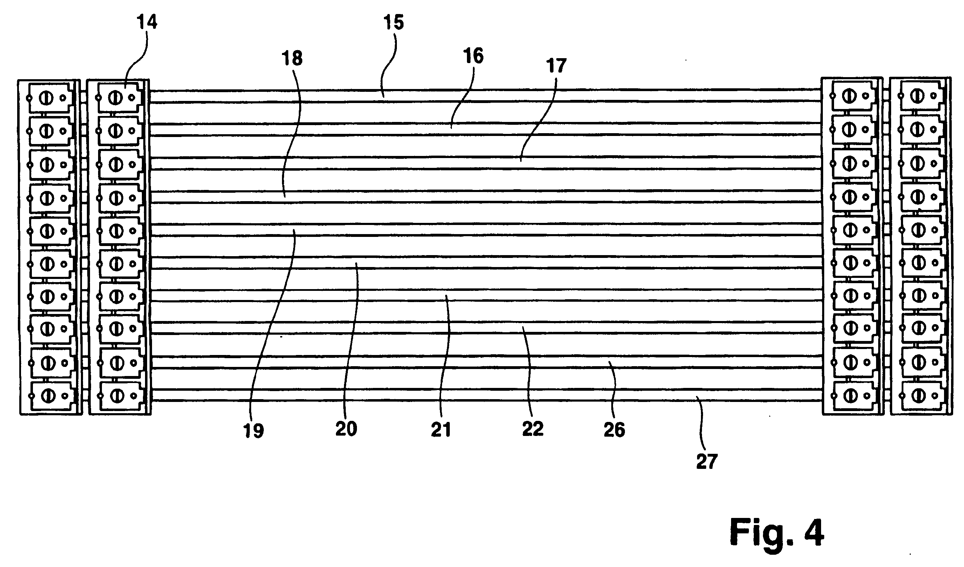

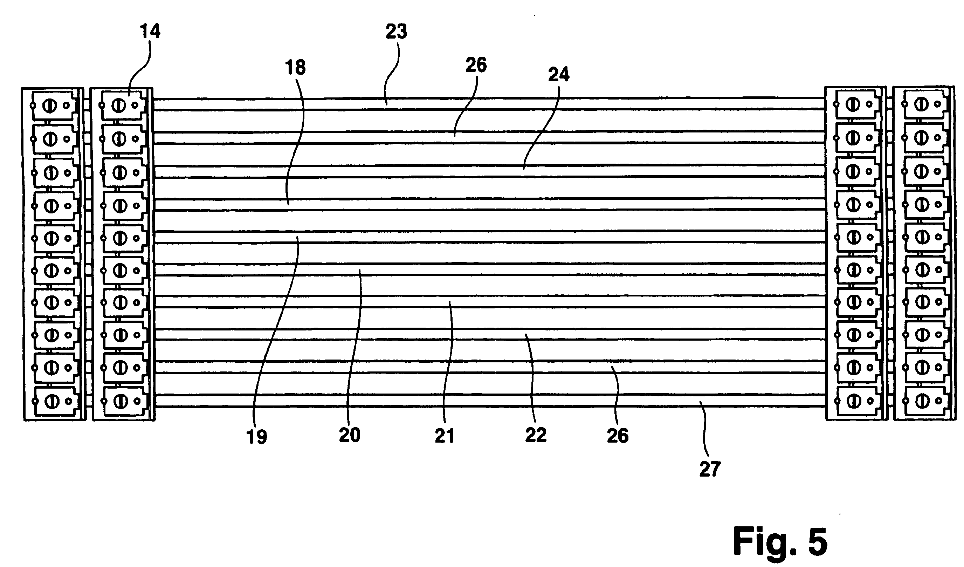

Jedes Modul weist Schnittstellen zur Ankopplung an eine zentrale Steuereinheit bzw. an weitere Module auf. Beidseitig sind jeweils zwei Reihen von Steckkontakten **14** vorgesehen. Gemäß **Fig. 4** sind drei Energieleitungen **15** bis **17** und ein Schutzleiter **18** für Drehstrom vorgesehen, um beispielsweise einen Motor anzutreiben. Leitungen **19** (24 V DC) und **20** (0 V DC) versorgen einen Verbraucher wie eine Leuchte oder ein Ventil permanent mit Energie, während an den Leitungen **21** und **22** nur bei entsprechender Schaltung 24 V DC oder 0 V DC anliegen. **Fig. 5** betrifft im Unterschied zur Ausführung gemäß Fig. 4 eine Ausführungsform für Wechselstrom mit einer Leitung **23** für 230 V AC und einer alternativen Leitung **24** für 115 V AC und einem gemeinsamen Nullleiter **25.** Jede Ausführungsform besitzt zusätzlich Datenleitungen **26** und **27.**

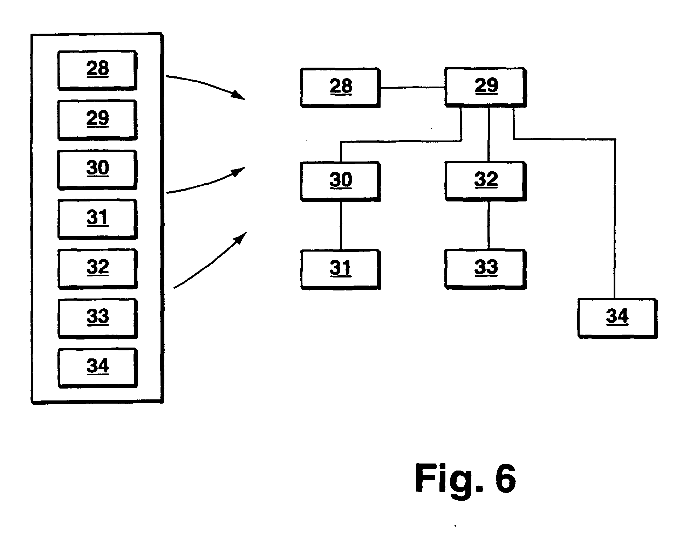

Bei der Konstruktion eines Schaltschranks für eine Anlage oder Maschine werden gemäß des erfindungsgemäßen Verfahrens in einem ersten Verfahrensschritt zunächst die erforderlichen Parameter oder Daten zum Betrieb der Anlage oder Maschine erfasst und/oder vorgegeben. In einem zweiten Verfahrenschritt werden in einer Datenbank abgespeicherte, jeweils eine bestimmte Funktion realisierende, vorgefertigte Module **28** bis **34** ausgewählt, wie dies in der **Fig. 6** angedeutet ist. Die Konstruktion des Schaltschranks umfasst somit zum einen eine Parametrierung, d.h. das Vorgeben und Einbringen der Daten der erforderlichen Funktionen für einen Betrieb der Anlage oder Maschine, und zum anderen eine Auswahl und Anordnung / Platzierung der Module 28 bis 34 im Schaltschrank. Nach der Zusammenstellung der im einzelnen bereits oben beschriebenen Module 28 bis 34 auf Grund der Parametrierung wird die Platzierung und elektrische Konnektierung der Module 28 bis 34 über den Energie- und Datenbus ausgeführt (siehe Fign. 4 und 5).

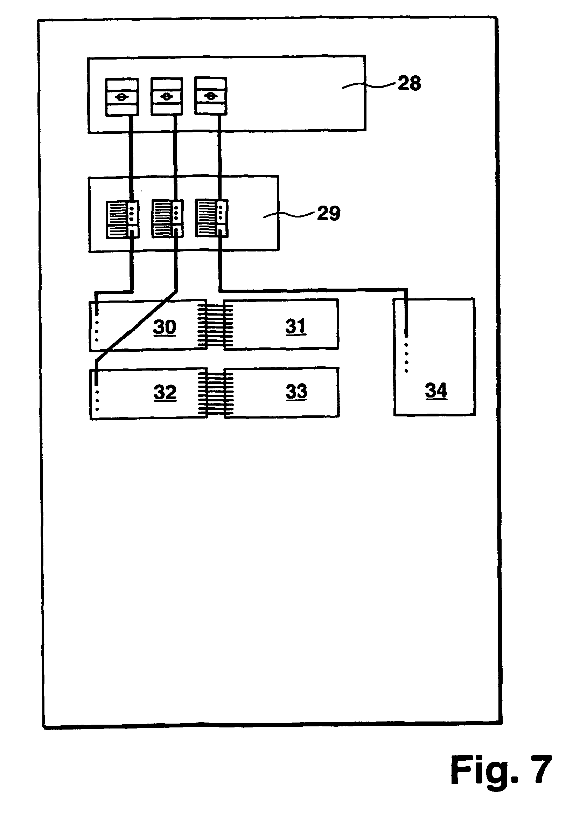

Die Umsetzung der prinzipiellen Platzierung und Konnektierung der Module 28 bis 34 in ein konkretes Layout einer Schaltschrankwand erfolgt in einem dritten Verfahrensschritt. Fig. 7 zeigt das auf die prinzipielle Logik gemäß Fig. 6 abgestimmte Layout der Schaltschrankwand bei einer erstellten Schaltschrankwand, an die Module 28 bis 34 angeordnet und konnektiert sind (4. Verfahrenschritt).

### BEZUGSZEICHENLISTE

- **1**: Funktionsbaugruppe
- **2**: Modul-Träger
- **3**: Modul
- **4**: Netzkarte
- **5**: Schutzschalter
- **6**: Schalter
- **7**: Anschluss
- **8**: Schnittstelle
- **9**: Modul
- **10**: Schrankwand
- **11**: Lasche
- **12**: Ausnehmung
- **13**: Schnittstelle
- **14**: Steckkontakt
- **15**: Energieleitung
- **16**: Energieleitung
- **17**: Energieleitung
- **18**: Schutzleiter
- **19**: Leitung
- **20**: Leitung
- **21**: Leitung
- **22**: Leitung
- **23**: Leitung
- **24**: Leitung
- **25**: Nullleiter
- **26**: Datenleitung
- **27**: Datenleitung
- **28**: Modul
- **29**: Modul
- **30**: Modul
- **31**: Modul
- **32**: Modul
- **33**: Modul
- **34**: Modul

## Patentansprüche

1. Montagesystem, insbesondere für einen Schaltschrank, mit einer Schnellmontageplatte (10) und mit mehreren Modulen (3; 9), von welchen jedes einerseits eine Funktionsbaugruppe (1) zur Umsetzung einer elektrischen Funktion zur Ansteuerung und Regelung einer Bearbeitungseinheit einer Maschine oder einer Anlage und andererseits einen separaten Modul-Träger (2) für die Funktionsbaugruppe (1) umfasst, wobei die Module (3; 9) an der Schnellmontageplatte (10) lösbar montierbar sind, wobei jedes Modul (3; 9) eine Schnittstelle (13) für ein Bussystem zur Übertragung von Energie und Daten sowie zur elektrischen Verbindung der Module (3; 9) untereinander aufweist.

2. Montagesystem nach Anspruch **1, dadurch gekennzeichnet, dass** der Modul-Träger (2) auf die Schnellmontageplatte (10) aufsteckbar ist.

3. Montagesystem nach Anspruch **1, dadurch gekennzeichnet, dass** der Modul-Träger (2) in Ausnehmungen (12) der Schnellmontageplatte (10) einhängbar ist.

4. Montagesystem nach Anspruch 2 oder 3, **dadurch gekennzeichnet, dass** der Modul-Träger (2) durch eine Modul- Trägerplatte mit Laschen (11) ausgebildet ist, welche in die Ausnehmungen (12) einsteckbar oder einhängbar sind.

5. Montagesystem nach einem oder mehreren der vorhergehenden Ansprüche, **dadurch gekennzeichnet, dass** zumindest ein Modul (3; 9) eine Schnittstelle und/oder eine Netzkarte zur Ankopplung an eine Steuereinheit der Maschine aufweist.

6. Verfahren zur Montage von Modulen (3; 9) gemäß einem der vorhergehenden Patentansprüche an einer Schnellmontageplatte (10) eines Montagesystems, insbesondere für einen Schaltschaltschrank, mit
- einer Parametrierung einer Bearbeitungseinheit einer Maschine oder einer Anlage;
- einer Auswahl vorgefertigter Module aus einer Datenbank;
- mit einem Erstellen eines Layouts einer Schnellmontageplatte, vorzugsweise einer Schaltschrankwand.

7. Verfahren nach Anspruch 6, **gekennzeichnet durch** eine Anordnung und Konnektierung der ausgewählten Module (3; 9) an der Schnellmontageplatte (10).

## Claims

1. Assembly system, in particular for a switch cabinet, having a rapid-assembly plate (10) and having a plurality of modules (3; 9), each of which comprises, at one side, a functional subassembly (1) for converting an electrical function in order to control and regulate a processing unit of a machine or an apparatus and, at the other side, a separate module carrier (2) for the functional subassembly (1), the modules (3; 9) being able to be releasably mounted on the rapid-assembly plate (10), each module (3; 9) having an interface (13) for a bus system for transmitting energy and data and electrically connecting the modules (3; 9) to each other.

2. Assembly system according to claim 1, **characterised in that** the module carrier (2) can be fitted to the rapid-assembly plate (10).

3. Assembly system according to claim 1, **characterised in that** the module carrier (2) can be suspended in recesses (12) of the rapid-assembly plate (10).

4. Assembly system according to claim 2 or 3, **characterised in that** the module carrier (2) is formed by a module carrier plate having tabs (11) which can be fitted or suspended in the recesses (12).

5. Assembly system according to any one or more of the preceding claims, **characterised in that** at least one module (3; 9) has an interface and/or a network card for connection to the control unit of the machine.

6. Method for assembling modules (3; 9) according to any one of the preceding claims on a rapid-assembly plate (10) of an assembly system, in particular for a switch cabinet, with
- parameterisation of a processing unit of a machine or an apparatus;
- a selection of prefabricated modules from a database;
- creation of a layout of a rapid-assembly plate, preferably a switch cabinet wall.

7. Method according to claim 6, **characterised by** the selected modules (3; 9) being arranged on and connected to the rapid-assembly plate (10).

## Revendications

1. Système de montage, en particulier pour une armoire de distribution, avec une plaque de montage rapide (10) et avec plusieurs modules (3 ; 9) dont chacun comprend, d'une part, un ensemble fonctionnel (1) pour la réalisation d'une fonction électrique pour la commande et la régulation d'une unité de traitement d'une machine ou d'une installation et, d'autre part, un support de modules (2) pour l'ensemble fonctionnel (1), les modules (3 ; 9) étant montables de manière amovible sur la plaque de montage rapide (10) et chaque module (3 ; 9) présentant une interface (13) pour un système de bus pour la transmission d'énergie et de données ainsi que pour la connexion électrique des modules (3 ; 9) entre eux.

2. Système de montage selon la revendication 1, **caractérisé par le fait que** le support de modules (2) est enfichable sur la plaque de montage rapide (10).

3. Système de montage selon la revendication 1, **caractérisé par le fait que** le support de modules (2) peut être accroché dans des évidements (12) de la plaque de montage rapide (10).

4. Système de montage selon la revendication 2 ou 3, **caractérisé par le fait que** le support de modules (2) est formé par une plaque-support de modules avec des pattes (11) qui peuvent être enfichées ou accrochées dans les évidements (12).

5. Système de montage selon l'une ou plusieurs des revendications précédentes, **caractérisé par le fait qu'**au moins un module (3 ; 9) présente une interface et/ou une carte réseau pour le couplage à une unité de commande de la machine.

6. Procédé pour le montage de modules (3 ; 9) selon l'une ou plusieurs des revendications précédentes sur une plaque de montage rapide (10) d'un système de montage, en particulier pour une armoire de distribution, comprenant
- un paramétrage d'une unité de traitement d'une machine ou d'une installation ;
- une sélection de modules préfabriqués dans une banque de données ;
- avec une élaboration d'une topologie d'une plaque de montage rapide (10), de préférence d'une paroi d'armoire de distribution.

7. Procédé selon la revendication 6, **caractérisé par** une disposition et une connexion des modules (3 ; 9) sélectionnés sur la plaque de montage rapide (10).
